(19) Europäisches Patentamt
European Patent Office
Office européen des brevets

(11) Veröffentlichungsnummer: **0 437 653 B1**

(12) **EUROPÄISCHE PATENTSCHRIFT**

(45) Veröffentlichungstag der Patentschrift: **14.09.94**

(51) Int. Cl.$^5$: **C07F 7/18**

(21) Anmeldenummer: **90100829.2**

(22) Anmeldetag: **16.01.90**

# (54) Verfahren zur Herstellung von Methacryloxy- oder Acryloxygruppen enthaltenden Organosilanen.

(43) Veröffentlichungstag der Anmeldung:
**24.07.91 Patentblatt 91/30**

(45) Bekanntmachung des Hinweises auf die Patenterteilung:
**14.09.94 Patentblatt 94/37**

(84) Benannte Vertragsstaaten:
**AT BE CH DE FR GB IT LI NL SE**

(56) Entgegenhaltungen:
**EP-A- 0 242 627**

**DATABASE WPI, Nr. 68-95828P[00], 1968, Derwent Publications Ltd, London, GB;& JP-B-40 023 332 (SHIN ETSU CHEM. IND. CO.), & JP-A-65 051 348 (Kat. D)**

**E.V. DEHMLOW et al.: "Monographs in Modern Chemistry - Phase Transfer Catalysis", 1983, Seiten 86-88, Verlag Chemie GmbH, Weinheim, DE**

(73) Patentinhaber: **HÜLS AKTIENGESELLSCHAFT**

**D-45764 Marl (DE)**

(72) Erfinder: **Amort, Jürgen, Dr.**
**Ubierstrasse 9**
**D-5210 Troisdorf 15 (DE)**
Erfinder: **Bernhardt, Günther, Dr.**
**Rheinstrasse 33**
**D-5205 St. Augustin 2 (DE)**
Erfinder: **Haas, Margret**
**Ürdinger Strasse 7**
**D-5000 Köln 60 (DE)**
Erfinder: **Hanisch, Horst, Dr.**
**Fröbelweg 19**
**D-5202 Hennef (DE)**
Erfinder: **Kragl, Heinz**
**Eichendorffstrasse 25**
**D-5210 Troisdorf 15 (DE)**

**EP 0 437 653 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung von Methacryloxy- oder Acryloxygruppen enthaltenden Organosilanen, die im Folgenden auch als Acrylsilane bezeichnet werden. Das Verfahren basiert auf der bekannten Umsetzung von Alkalimethacrylaten oder Alkaliacrylaten mit Chloralkylsilanen in Gegenwart von quaternären Ammoniumsalzen als Katalysatoren.

Diese bekannte Umsetzung ist in der japanischen Patentanmeldung 51348/65 beschrieben; dort wird ausgesagt, daß Acrylsilane der allgemeinen Formel I

$$CH_2=\underset{\underset{R^1}{|}}{C}-COO(CH_2)_n-\overset{\overset{R^2_m}{|}}{Si}(OR^3)_{3-m} \qquad (I),$$

in der $R^1$ ein Wasserstoffatom oder ein Methylrest, $R^2$ ein Alkylrest mit 1 bis 4 C-Atomen, $R^3$ Alkylgruppen mit 1 bis 4 C-Atomen, m entweder 0 oder 1 oder 2 und n eine Zahl von 1 bis 4 bedeuten, durch Umsetzung von festen Alkalisalzen der Methacrylsäure oder Acrylsäure mit Chloralkylsilanen der allgemeinen Formel

$$Cl-CH_2-(CH_2)_{n-1}\overset{\overset{R^2_m}{|}}{Si}-(OR^3)_{3-m},$$

in der $R^2$ und $R^3$ = $C_1$- bis $C_4$-Alkylgruppen, m = 0 bis 2 und n = 1 bis 4 bedeuten, in Gegenwart von quaternären Ammoniumsalzen als Fest-Flüssig-Phasentransfer-Katalysatoren hergestellt werden können.

Als Phasentransfer-Katalysatoren werden in dem japanischen Schutzrecht Triethylamin, Dimethylanilin, Tetramethylammoniumchlorid und Benzyltrimethylammoniumchlorid genannt. Die beiden zuletzt genannten Verbindungen werden in den Beispielen der japanischen Patentanmeldung für die Umsetzung zwischen der festen Phase, bestehend aus dem Alkalisalz der Methacryl- oder Acrylsäure, und der flüssigen Phase, bestehend aus dem Chloralkylsilan und den Phasentransfer-Katalysatoren verwendet.

Zur Durchführung der Umsetzung sind bei Anwendung dieser Katalysatoren hohe Reaktionstemperaturen von 140 °C bis 180 °C erforderlich, wobei die Reaktionszeiten teilweise bis auf 6 Stunden ausgedehnt werden müssen. Es sind außerdem hohe Überschüsse an Chloralkylsilanen, die bis zum 10fachen der Molmenge an Alkalimethacrylat oder -acrylat betragen können, erforderlich. Weiterhin müssen zusätzliche Lösungsmittel, wie z. B. Dimethylformamid, Toluol oder Xylol eingesetzt werden.

Die Ausbeuten an Organosilanen liegen bei diesem bekannten Verfahren deutlich unter 90 % und erreichen häufig nur Werte von 70 %. Bei einem Molverhältnis von Alkali(meth)acrylat/Chloralkylsilan von 1 : 1 beträgt die Ausbeute sogar nur 65 %, und als Begleitprodukt entstehen große Mengen polymeren Materials. Außerdem stellen die anzuwendenden hohen Reaktionstemperaturen, die großen Überschüsse an Chloralkylsilanen, das zusätzliche Lösungsmittel und die langen Reaktionszeiten entscheidende Nachteile dar. Hohe Temperaturen begünstigen dabei die Ausbildung unerwünschter polymerer Produkte. Lange Reaktionszeiten und hohe Überschüsse an Chlorsilanen führen zu einer erheblichen Minderung der Raum-Zeit-Ausbeute. Außerdem verschlechtern die hohen Überschüsse an Chloralkylsilanen und die Verwendung eines zusätzlichen Lösungsmittels die Energiebilanz bei der destillativen Reindarstellung der Organosilane. Ferner wirkt sich die Verwendung eines zusätzlichen Lösungsmittels nachteilig auf die Ausbeuten an Organosilanen aus.

Es bestand deshalb die Aufgabe, die Umsetzung zwischen Alkali(meth)acrylaten und Chloralkylsilanen unter Bildung von Acrylsilanen so zu führen, daß man bei niedrigen Reaktionstemperaturen arbeiten kann, eine höhere Raum-Zeit-Ausbeute erhält und der Anteil an polymeren Reaktionsprodukten möglichst gering ist.

In Erfüllung dieser Aufgabe wurde nun ein Verfahren zur Herstellung von Acrylsilanen der allgemeinen Formel I

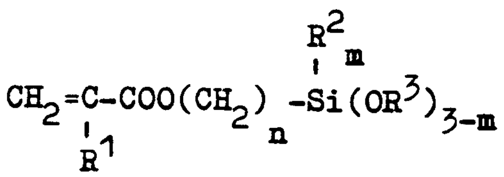 (I),

in der $R^1$ für ein Wasserstoffatom oder einen Methylrest, $R^2$ für einen Alkylrest mit 1 bis 4 C-Atomen, $R^3$ für Alkylgruppen mit 1 bis 4 C-Atomen oder Alkoxyalkylgruppen mit einer Gesamt-C-Zahl von 2 bis 4, m für 0 oder 1 oder 2 und n für 1 oder 3 oder 4 stehen, durch Umsetzung von Alkalisalzen der Methacrylsäure oder Acrylsäure mit Halogenalkylsilanen der allgemeinen Formel II

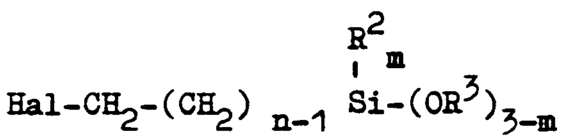 (II),

in der $R^2$, $R^3$, m und n wie oben definiert sind, in Gegenwart eines Phasentransfer-Katalysators gefunden, das dadurch gekennzeichnet ist, daß man als Phasentransfer-Katalysator quaternäre Ammoniumsalze der allgemeinen Formel III verwendet,

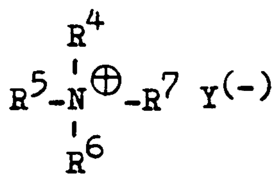 (III),

in der $R^4$ bis $R^7$ gleiche oder verschiedene Alkylreste mit einer C-Zahl von 1 bis 37 sind, wobei die Summe aller C-Atome 10 bis 40 beträgt und $y^{(-)}$ ein Chlorid-, Bromid-, Sulfat- oder Phosphat-Ion bedeutet und die Umsetzung bei Temperaturen zwischen 80 °C und 130 °C durchgeführt wird.

Bei der erfindungsgemäßen Verfahrensweise kann man bei erheblich niedrigeren Temperaturen als bei dem in der japanischen Veröffentlichung beschriebenen Verfahren arbeiten und erhält dennoch Ausbeuten, die weit höher sind als bei der bekannten Verfahrensweise. Insbesondere ist der Anteil an polymeren Produkten äußerst gering.

Die erfindungsgemäß geeigneten quaternären Ammoniumsalze sind solche, die der vorgenannten Formel III entsprechen. Als Beispiele werden genannt: Tributyl-methyl-ammoniumchlorid, Triethyl-cetyl-ammoniumbromid, Didodecyl-dimethyl-ammoniumchlorid, Distearyl-dimethyl-ammoniumchlorid, Tricapryl-methyl-ammoniumchlorid, ALIQUAT$^{(R)}$336 ( = Tris(n-$C_8$- und $C_{10}$-alkyl)methyl-ammoniumchlorid), Trioctyl-methyl-ammoniumchlorid oder Tetrabutyl-ammoniumchlorid oder -bromid.

Aus dieser Aufzählung geht hervor, daß sich auch solche quaternären Ammoniumsalze als Katalysatoren eignen, deren Alkylsubstituenten ungleiche Kettenlängen haben und auch aus einem Gemisch verschiedener Alkylgruppen bestehen können. Der Katalysator braucht also nicht eine stöchiometrisch einheitliche Substanz zu sein.

Besonders geeignet sind Trioctyl-methyl-ammoniumchlorid, Tetrabutyl-ammoniumchlorid oder -bromid und ALIQUAT$^{(R)}$336.

Aufgrund des Einsatzes der beschriebenen quaternären Ammoniumsalze als Katalysatoren wird die Reaktionsgeschwindigkeit der Umsetzung von Alkalisalzen der Methacrylsäure oder Acrylsäure mit Halogenalkylsilanen der allgemeinen Formel II im Vergleich zu den bekannten Verfahren erheblich gesteigert, wobei gleichzeitig die Reaktionstemperatur erniedrigt und die Reaktionsdauer verkürzt werden. So beträgt die Reaktionstemperatur in dem erfindungsgemäßen Verfahren 80 °C bis 130 °C, vorzugsweise 100 °C bis 120 °C, und die Reaktionsdauer zwischen 15 und 180 Minuten, vorzugsweise zwischen 30 und 120 Minuten.

Der Katalysator wird in Mengen von 0,001 Molen bis 0,05 Molen, bevorzugt in Mengen von 0,005 Molen bis 0,03 Molen, bezogen auf 1 Mol Alkalimethacrylat oder -acrylat, verwendet. Die erfindungsgemäß

einzusetzenden Phasentransfer-Katalysatoren sind unter den Temperaturbedingungen, wie sie in den Beispielen der japanischen Anmeldung 51348/65 beschrieben sind, nicht mehr stabil; ihr thermischer Zerfall oberhalb 140 °C ist bereits beträchtlich.

Die Reaktionspartner werden im allgemeinen im stöchiometrischen Verhältnis zueinander eingesetzt. Ein geringer Überschuß sowohl von Halogenalkylsilanen als auch des Alkali(meth)acrylats ist möglich, so daß das Molverhältnis des eingesetzten Alkali(meth)acrylats zu dem Halogensilan zwischen 1,2 : 1 und 1 : 1,2 liegen kann.

Vorzugsweise wird die Reaktion in Abwesenheit von zusätzlichen Lösungsmitteln durchgeführt. Es ist jedoch auch möglich, die Umsetzung in Gegenwart von organischen wasserfreien Lösungsmitteln (z. B. Alkoholen), die beispielsweise mit einem Reaktionspartner zusammen in das Reaktionssystem eingeführt werden, zu beginnen. Solche Lösungsmittel sollen jedoch dann im Verlauf der Umsetzung, vorzugsweise bereits zu Beginn der Umsetzung, weitgehend aus dem Reaktionsgemisch entfernt werden.

Durch die Vermeidung von hohen Überschüssen an Halogenalkylsilanen und durch den Verzicht auf zusätzliche Lösungsmittel bei der Umsetzung werden sowohl hohe Raum-Zeit-Ausbeuten als auch eine günstige Energiebilanz erreicht, da das Abdestillieren von nicht reaktiv genutzten Chloralkylsilanen und von Lösungsmitteln entfällt.

Als Alkalimethacrylate oder Alkaliacrylate werden erfindungsgemäß die entsprechenden Kalium- oder Natriumsalze verwendet. Sie können sowohl in fester Form, aber auch in Form von Lösungen oder Dispersionen in einem geeigneten Lösungsmittel in die Reaktion eingesetzt werden. Eine bevorzugte Durchführungsform besteht darin, solche Methacrylate oder Acrylate einzusetzen, die durch Neutralisation von Methacrylsäure oder Acrylsäure mit alkoholischen Lösungen von Kaliumalkoholaten oder Natriumalkoholaten hergestellt wurden. Die dabei erhaltenen Lösungen oder Dispersionen werden mit den Halogenalkylsilanen und dem Phasentransfer-Katalysator vermischt, und anschließend werden die Alkohole abdestilliert, wobei mit der Entfernung der Alkohole die Reaktion zwischen Alkalimethacrylaten oder -acrylaten und den Halogenalkylsilanen einsetzt.

Beispiele für die erfindungsgemäß verwendbaren Halogenalkylsilane der allgemeinen Formel II sind Chlormethyldimethylmethoxysilan, γ-Chlorpropyltrimethoxysilan, γ -Chlorpropyltriethoxysilan, γ -Chlorpropyl-tris-(methoxyethoxy)silan, γ -Chlorpropyl-methyldimethoxysilan, γ -Chlorpropyl-butyl-dimethoxysilan, δ -Chlorbutyltrimethoxysilan, δ -Chlorbutyl-methyl-dimethoxysilan, δ -Chlorbutyl-tris-(methoxyethoxy)silan, γ -Brompropyltrimethoxysilan u. a.

Die Umsetzung der Alkalimethacrylate oder -acrylate mit Halogenalkylsilanen der allgemeinen Formel II erfolgt durch Abmischung der Reaktanden und des Phasentransfer-Katalysators im gewählten Molverhältnis. Anschließend wird die dabei erhaltene Reaktionsmischung unter ständiger Durchmischung auf die Reaktionstemperatur gebracht; dabei werden gegebenenfalls anwesende zusätzliche Lösungsmittel abdestilliert.

Nach Beendigung der Umsetzung werden die gebildeten Acrylsilane in an sich bekannter Weise isoliert. Zweckmäßigerweise werden sie abdestilliert, entweder nach Abtrennung von ausgefallenem Alkalichlorid oder direkt aus dem erhaltenen Reaktionsgemisch. Zur Schonung der Acrylsilane ist es im allgemeinen zweckmäßig, die Destillation unter reduziertem Druck durchzuführen.

Es ist von Vorteil, bereits während der Umsetzung dem Reaktionsgemisch an sich bekannte Polymerisationsinhibitoren zuzusetzen. Dazu geeignete Substanzen sind z. B. Hydrochinon, Hydrochinonmonomethylether, N,N'-Diphenyl-p-phenylendiamin, Phenyl-α -naphthylamin, die in Mengen von 0,001 bis 1 Gew.-%, bezogen auf das Acrylsilan, hinzugefügt werden. Auch das destillierte oder auf andere Weise isolierte Reinprodukt wird vorteilhafterweise mit den gleichen Inhibitoren versetzt.

Beispiel 1

43 g (0,5 Mole) Methacrylsäure werden mit 45 g Methanol gemischt und die Mischung unter Rühren mit 130 g einer 26,9 %igen Kaliummethylatlösung in Methanol neutralisiert. In die dabei gebildete Salzdispersion werden unter fortgesetztem Rühren 0,3 g N,N'-Diphenyl-p-phenylendiamin und 105,2 g (0,53 Mole) γ -Chlorpropyltrimethoxysilan eingetropft; gleichzeitig wird Methanol abdestilliert, bis die Temperatur der Mischung 110 °C erreicht. Nach Abkühluug auf 50 °C werden 1,7 g (0,004 Mole) ALIQUAT(R) 336 (Handelsprodukt der Firma Henkel, Düsseldorf) hinzugefügt und unter Anlegen von Vakuum das restliche Methanol und 6 g (0,03 Mole) des γ -Chlorpropyltrimethoxysilans abdestilliert.

Die Reaktionsmischung wird daraufhin 1,5 Stunden bei 115 °C gehalten. Anschließend wird abgekühlt und das als Nebenprodukt gebildete Kaliumchlorid filtriert. Das Filtrat wird unter reduziertem Druck destilliert. Es werden 114,5 g γ -Methacryloxypropyltrimethoxysilan vom Siedepunkt 82 °C (0,4 mbar) und $n^{20}$ = 1,4308 erhalten, was einer Ausbeute von 92,3 %, bezogen auf eingesetzte Methacrylsäure, entspricht.

Beispiel 2

54 g (0,5 Mole) festes Natriummethacrylat werden mit 99,3 g (0,5 Molen) γ-Chlorpropyltrimethoxysilan, 2,5 g (0,006 Molen) ALIQUAT$^{(R)}$ 336 und 0,4 g N,N'-Diphenyl-p-phenylendiamin gemischt und unter Rühren auf 112 °C erhitzt. Nach 1 Stunde Reaktionsdauer wird abgekühlt und das als Nebenprodukt entstandene Natriumchlorid durch Filtration entfernt. Das Filtrat wird unter vermindertem Druck destilliert, wobei 119 g γ -Methacryloxypropyltrimethoxysilan vom Siedepunkt 82 °C (0,4 mbar) und $n^{20}$ = 1,4308 erhalten werden. Bezogen auf eingesetztes Natriummethacrylat beträgt die Ausbeute 96,0 %.

Beispiele 3 bis 6

In Abänderung von Beispiel 1 werden anstelle von γ -Chlorpropyltrimethoxysilan die in Tabelle 1 angegebenen Chloralkylsilane verwendet bei sonst gleicher Verfahrensweise wie in Beispiel 1. In Tabelle 1 sind die erhaltenen Ausbeuten und die Siedepunkte der entsprechenden Methacryloxysilane aufgeführt.

Beispiel 7

55,1 g (0,5 Mole) Kaliumacrylat werden mit 99,3 g (0,5 Molen) γ -Chlorpropyltrimethoxysilan, 3,75 g (0,008 Molen) ALIQUAT$^{(R)}$ 336 und 0,3 g N,N'-Diphenyl-p-phenylendiamin gemischt und unter Rühren auf 115 °C erhitzt. Nach 1,5 Stunden Reaktionsdauer wird abgekühlt und das als Nebenprodukt entstandene Kaliumchlorid filtriert. Das Filtrat wird unter reduziertem Druck destilliert, wobei 109,4 g Acryloxypropyltrimethoxysilan vom Siedepunkt 80 °C (0,5 mbar) erhalten werden. Bezogen auf eingesetztes Kaliumacrylat beträgt die Ausbeute 93,5 %.

Beispiel 8

In Abänderung von Beispiel 1 werden anstelle von ALIQUAT$^{(R)}$ 336 2,8 g (0,009 Mole) Tetrabutylammoniumbromid verwendet, bei sonst gleicher Verfahrensweise wie im Beispiel 1. Es werden 112,5 g γ -Methacryloxypropyltrimethoxysilan erhalten, was einer Ausbeute von 90,7 %, bezogen auf eingesetzte Methacrylsäure, entspricht.

Vergleichsbeispiel

Es wird das Beispiel 1 wiederholt, jedoch anstelle von ALIQUAT$^{(R)}$ 336 wird als quaternäres Ammoniumsalz Trimethylbenzylammoniumchlorid in einer Menge von 1,5 g (0,009 Mole) eingesetzt; im übrigen wird wie im Beispiel 1 vorgegangen.

Bei der Destillation des Filtrats unter reduziertem Druck werden 97,5 g Destillat vom Siedebereich 60 bis 86 °C (0,3 mbar) erhalten. Die gaschromatographische Analyse ergibt einen Anteil von 17,7 g γ -Methacryloxypropyltrimethoxysilan, was einer Ausbeute von 14,3 %, bezogen auf eingesetzte Methacrylsäure, entspricht.

Tabelle 1

| Beispiel | Chloralkylsilan | g | Mole | Methacryloxysilan | Ausbeute+) g | Ausbeute+) % | Siedepunkt °C / mbar |
|---|---|---|---|---|---|---|---|
| 3 | γ-Chlorpropyl-methyl dimethoxysilan | 93,2 | 0,51 | γ-Methacryloxypropyl-methyl-dimethoxysilan | 108,2 | 93,1 | 66 / 0,2 |
| 4 | γ-Chlorpropyl-triethoxysilan | 127,6 | 0,53 | γ-Methacryloxypropyl-triethoxysilan | 131,9 | 90,8 | 92 / 0,25 |
| 5 | δ-Chlorbutyl-trimethoxysilan | 112,8 | 0,53 | δ-Methacryloxybutyl-trimethoxysilan | 120,0 | 91,5 | 82 / 0,13 |
| 6 | Chlormethyl-dimethyl-methoxysilan | 77,6 | 0,56 | Methacryloxymethyl-dimethyl-methoxysilan | 83,8 | 89,0 | 70 /19,5 |

+) bezogen aus 0,5 Mole eingesetztes Alkalimethacrylat

## Patentansprüche

1. Verfahren zur Herstellung von Methacryloxy- oder Acryloxygruppen enthaltenden Organosilanen der allgemeinen Formel I

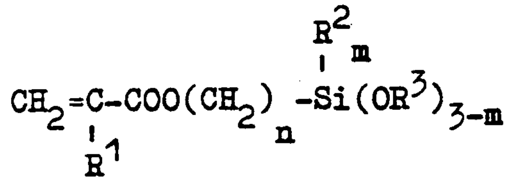

(I),

in der $R^1$ für ein Wasserstoffatom oder eine Methylgruppe, $R^2$ für einen Alkylrest mit 1 bis 4 C-Atomen, $R^3$ für Alkylgruppen mit 1 bis 4 C-Atomen oder Alkoxyalkylgruppen mit einer Gesamt-C-Zahl von 2 bis 4, m für 0 oder 1 oder 2 und n für 1, 3 oder 4 stehen, durch Umsetzen von Alkalimethacrylaten oder -acrylaten mit Halogenalkylsilanen der allgemeinen Formel II

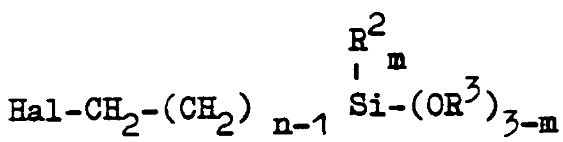

(II),

in der $R^2$, $R^3$, m und n wie oben definiert sind und Hal für Chlor oder Brom steht, in Anwesenheit von quaternären Ammoniumsalzen als Katalysatoren, **dadurch gekennzeichnet**, daß die Umsetzung bei Temperaturen zwischen 80 °C und 130 °C durchgeführt wird und als quaternäre Ammoniumsalze solche der allgemeinen Formel III verwendet werden

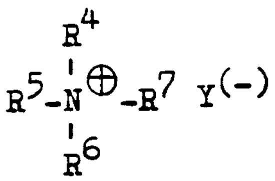

(III),

in der $y^{(-)}$ für ein Halogenid-, Sulfat- oder Phosphat-Ion und $R^4$, $R^5$, $R^6$ und $R^7$ für gleiche oder ungleiche Alkylgruppen mit 1 bis 37 C-Atomen stehen, wobei die Summe aller C-Atome zwischen 10 und 40 beträgt.

**2.** Verfahren gemäß Anspruch 1, dadurch gekennzeichnet, daß als quaternäres Ammoniumsalz Tris (n-$C_8$ und $C_{10}$-alkyl)methyl-ammoniumchlorid verwendet wird.

**3.** Verfahren nach Anspruch 1 oder 2, dadurch gekennzeichnet, daß die Umsetzung in Abwesenheit eines zusätzlichen Lösungsmittels durchgeführt wird.

**4.** Verfahren gemäß einem der Ansprüche 1 bis 3, dadurch gekennzeichnet, daß das Molverhältnis des eingesetzten Alkalimethacrylats oder -acrylats zu dem Halogenalkylsilan der Formel II zwischen 1,2 : 1 und 1 : 1,2 liegt.

## Claims

**1.** Process for the preparation of methacryloxy-or acryloxy group-containing organosilanes of the general formula I

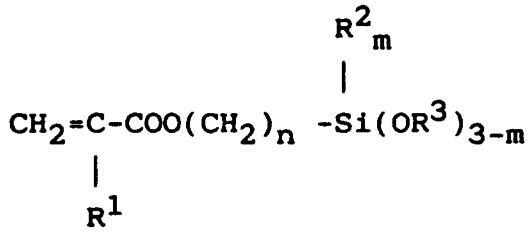 (I),

in which $R^1$ stands for a hydrogen atom or a methyl group, $R^2$ stands for an alkyl residue with 1 to 4 C-atoms, $R^3$ stands for alkyl groups with 1 to 4 C-atoms or alkoxyalkyl groups with a total C-number of 2 to 4, m stands for 0 or 1 or 2 and n stands for 1, 3 or 4, by reaction of alkali methacrylates or acrylates with haloalkylsilanes of the general formula II

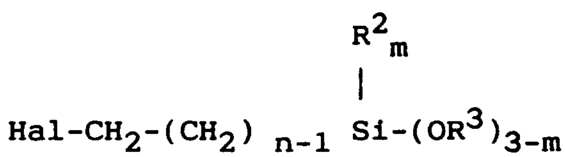 (II),

in which $R^2$, $R^3$, m and n are defined as above and Hal stands for chlorine or bromine, in the presence of quaternary ammonium salts as catalysts, **characterised in that** the reaction is carried out at temperatures between 80 °C and 130 °C and, as quaternary ammonium salts, there are used those of general formula III

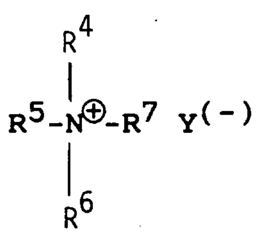 (III),

in which $Y^{(-)}$ stands for a halide, sulphate or phosphate ion and $R^4$, $R^5$ and $R^6$ and $R^7$ stand for like or unlike alkyl groups with 1 to 37 C-atoms, with the sum of all C-atoms amounting to between 10 and 40.

**2.** Process according to claim 1, **characterised in that** tris(n-$C_8$ and $C_{10}$-alkyl) methyl ammonium chloride is used as quaternary ammonium salt.

**3.** Process according to claim 1 or claim 2, **characterised in that** the reaction is carried out in the absence of an additional solvent.

**4.** Process according to one of claims 1 to 3, **characterized in that** the molar ratio of the alkali methacrylate or acrylate employed to the haloalkylsilane of formula II lies between 1.2 : 1 and 1 : 1.2.

**Revendications**

**1.** Procédé de préparation d'organosilanes contenant des groupes méthacryloxy ou acryloxy répondant à la formule générale I

$$R^2_m$$

$$|$$

$$CH_2{=}C{-}COO(CH_2)_n{-}Si(OR^3)_{3-m} \qquad (I),$$

$$|$$

$$R^1$$

dans laquelle $R^1$ représente un atome d'hydrogène ou un groupe méthyle, $R^2$ représente un reste alkyle avec 1 à 4 atomes de C, $R^3$ représente des groupes alkyles avec 1 à 4 atomes de C ou des groupes alcoxyalkyles avec un nombre total de C de 2 à 4, m représente 0 ou 1 ou 2 et n représente 1, 3 ou 4, par réaction de méthacrylates ou d'acrylates alcalins avec des halogéno-alkylsilanes de formule générale II

$$R^2_m$$

$$|$$

$$Hal{-}CH_2{-}(CH_2)_{n-1}Si{-}(OR^3)_{3-m} \qquad (II),$$

dans laquelle $R^2$,$R^3$, m et n sont définis comme ci-dessus et Hal représente le chlore ou le brome, en présence de sels d'ammonium quaternaires comme catalyseurs, caractérisé en ce que la réaction est conduite à des températures entre 80 °C et 130 °C et qu'on utilise comme sels d'ammonium quaternaires ceux répondant à la formule générale III

$$R^4$$

$$|$$

$$R^5{-}N^{\oplus}{-}R^7 \; Y^{(-)} \qquad (III)$$

$$|$$

$$R^6$$

dans laquelle $Y^{(-)}$ représente un ion halogénure, sulfate ou phosphate et $R^4$, $R^5$, $R^6$ et $R^7$ représentent des groupes alkyles identiques ou différents avec 1 à 37 atomes de C, la somme de tous les atomes de C s'étendant de 10 à 40.

**2.** Procédé selon la revendication 1, caractérisé en ce que du chlorure de tris (alkyl n-$C_8$ et $C_{10}$)-méthylammonium est employé comme sel d'ammonium quaternaire.

**3.** Procédé selon la revendication 1 ou 2, caractérisé en ce que la réaction est conduite en l'absence d'un solvant additionnel.

**4.** Procédé selon l'une des revendications 1 à 3, caractérisé en ce que le rapport molaire du méthacrylate ou acrylate alcalin mis en oeuvre à l'halogéno-alkylsilane de formule II se situe entre 1,2:1 et 1:1,2.